# EUROPEAN PATENT SPECIFICATION

(11) **EP 4 156 451 B1**
(45) Date of publication and mention of the grant of the patent: **25.06.2025**
(21) Application number: 21884592.3
(22) Date of filing: 17.08.2021
(51) Int. Cl.: H02J 9/06, H02M 5/42

(54) **SYSTEM COMPATIBLE CIRCUIT, UNINTERRUPTIBLE POWER SUPPLY AND SYSTEM COMPATIBLE METHOD**
SYSTEMKOMPATIBLE SCHALTUNG, UNTERBRECHUNGSFREIE STROMVERSORGUNG UND SYSTEMKOMPATIBLES VERFAHREN
CIRCUIT COMPATIBLE AVEC LE SYSTÈME, ALIMENTATION ÉLECTRIQUE SANS COUPURE ET PROCÉDÉ COMPATIBLE AVEC LE SYSTÈME

(30) Priority: 30.10.2020 CN 202011189295
(43) Date of publication of application: 29.03.2023
(73) Proprietor: Kehua Data Co., Ltd, 361000 Xiamen Fujian (CN); Zhangzhou Kehua Technology Co., Ltd., Zhangzhou, Fujian 363000 (CN)
(72) Inventor: ZHANG, Guangliang, Xiamen, Fujian 361000 (CN); XU, Ying, Xiamen, Fujian 361000 (CN); HUANGZHAN, Jiangyong, Xiamen, Fujian 361000 (CN)
(74) Representative: Isarpatent
(86) International application number: PCT/CN2021/113051
(87) International publication number: WO 2022/088860

(56) References cited:
- CN-A- 101 068 083
- CN-A- 103 715 754
- CN-A- 107 546 845
- CN-A- 112 383 129
- CN-U- 202 749 893
- CN-U- 208 637 819
- CN-U- 209 545 239
- CN-U- 209 545 239
- US-A1- 2008 093 927

## Description

### TECHNICAL FIELD

The present application relates to the technical field of uninterruptible power supply, and particularly relates to a mode compatible circuit, an uninterruptible power supply and a mode compatible method.

### BACKGROUND

In different application environments, UPS (Uninterruptible Power Supply) may need to work in different modes, such as three-input-three-output mode, three-input-one-output mode, etc.. However, as the demand is proposed, the UPS is required to be compatible with different modes under specific application environment. However, in the prior art, the UPS can only work in a single mode, lacking a circuit that can make the UPS compatible with different modes and save cost.

CN 209 545 239 U discloses a multi-modes switching circuit including a main circuit, the main circuit comprises a first conversion unit, a second conversion unit and a third conversion unit.

### SUMMARY

The present application provides a mode compatible circuit, an uninterruptible power supply and a mode compatible method to solve the problem that the prior art lacks a circuit that can make UPS compatible with different modes and save cost.

The present invention is set out by the appended claims.

A first aspect of the present invention provides a mode compatible circuit, as defined by independent claim 1, which includes a main circuit and a control circuit;
the main circuit includes a first conversion unit, a second conversion unit, a third conversion unit, a first wiring terminal, a second wiring terminal, a third wiring terminal, a fourth wiring terminal, a fifth wiring terminal, a sixth wiring terminal, a seventh wiring terminal and an eighth wiring terminal;
the control circuit is respectively connected with the first conversion unit, the second conversion unit, and the third conversion unit;
an A-phase input end of the main circuit is respectively connected with the first wiring terminal and a first output end of the mode compatible circuit through the first conversion unit, a B-phase input end of the main circuit is respectively connected with the second wiring terminal and a second output end of the mode compatible circuit through the second conversion unit, a C-phase input end of the main circuit is respectively connected with the third wiring terminal and the fourth wiring terminal through the third conversion unit, and an N-line input end of the main circuit is respectively connected with the fifth wiring terminal, the sixth wiring terminal and a fourth output end of the mode compatible circuit; and
the seventh wiring terminal and the eighth wiring terminal are connected with a third output end of the mode compatible circuit;
in a first mode, the control circuit is adapted to control a phase difference of an output of the first conversion unit and an output of the second conversion unit, a phase difference of the output of the second conversion unit and an output of the third conversion unit, and a phase difference of the output of the third conversion unit and the output of the first conversion unit to be all a preset phase difference; and
in a second mode, the control circuit is adapted to control the output of the first conversion unit, the output of the second conversion unit and the output of the third conversion unit to be all same, without a phase difference;
the mode compatible circuit is configured to:
in the first mode, connect the third wiring terminal and the fourth wiring terminal with the seventh wiring terminal and the eighth wiring terminal respectively; and
in the second mode, connect the first wiring terminal and the second wiring terminal with the third wiring terminal and the fourth wiring terminal respectively, and connect the fifth wiring terminal and the sixth wiring terminal with the seventh wiring terminal and the eighth wiring terminal respectively.

A second aspect of embodiments of the present application provides a uninterruptible power supply, which includes the mode compatible circuit as described in the first aspect.

A third aspect of embodiments of the present application provides a mode compatible method, which applies to the mode compatible circuit as described in the aspect and includes:
when the mode compatible circuit adopts the first mode, connecting the third wiring terminal and the fourth wiring terminal with the seventh wiring terminal and the eighth wiring terminal respectively, and controlling a phase difference of an output of the first conversion unit and an output of the second conversion unit, a phase difference of the output of the second conversion unit and an output of the third conversion unit, and a phase difference of the output of the third conversion unit and the output of the first conversion unit to be all a preset phase difference; and
when the mode compatible circuit adopts the second mode, connecting the first wiring terminal and the second wiring terminal with the third wiring terminal and the fourth wiring terminal respectively, connecting the fifth wiring terminal and the sixth wiring terminal with the seventh wiring terminal and the eighth wiring terminal respectively, and controlling the output of the first conversion unit, the output of the second conversion unit and the output of the third conversion unit to be all consistent.

Compared with the prior art, the embodiments of the present application have the following beneficial effects: the mode compatible circuit of the embodiments of the present application includes a main circuit; the main circuit includes a first conversion unit, a second conversion unit, a third conversion unit, a first wiring terminal, a second wiring terminal, a third wiring terminal, a fourth wiring terminal, a fifth wiring terminal, a sixth wiring terminal, a seventh wiring terminal and an eighth wiring terminal; an A-phase input end of the main circuit is respectively connected with the first wiring terminal and a first output end of the mode compatible circuit through the first conversion unit, a B-phase input end of the main circuit is respectively connected with the second wiring terminal and a second output end of the mode compatible circuit through the second conversion unit, a C-phase input end of the main circuit is respectively connected with the third wiring terminal and the fourth wiring terminal through the third conversion unit, and an N-line input end is respectively connected with the fifth wiring terminal, the sixth wiring terminal and a fourth output end of the mode compatible circuit; and the seventh wiring terminal and the eighth wiring terminal are connected with a third output end of the mode compatible circuit. The above mode compatible circuit can directly switch between different modes by controlling the connection relationship between each wiring terminal, and it does not need to increase the amount of air circuit breakers or replace the air circuit breakers or add additional wiring blocks or replace the wiring blocks, which can save the cost.

### BRIEF DESCRIPTION OF THE DRAWINGS

In order to more clearly illustrate the technical solutions in the embodiments of the application, the following description briefly introduces the drawings used in the embodiments or the prior art, and it is obvious that the drawings in the following description are only some embodiments of the application, and that other drawings can be obtained from these drawings by a person skilled in the art without involving any inventive effort.
Fig. 1 is a structural diagram of a mode compatible circuit provided by an embodiment of the present application;
Fig. 2 is a structural diagram of a mode compatible circuit provided by an embodiment of the present application; and
Fig. 3 is an implementation flow diagram provided by a mode compatible method provided by an embodiment of the present application.

### DETAILED DESCRIPTION OF ILLUSTRATIVE EMBODIMENTS

In the following description, for the purpose of illustration rather than limitation, specific details such as a specific mode structure and technology are set forth in order to provide a thorough understanding of the embodiments of the present application. However, it should be apparent to those skilled in the art that the technical solutions of the present application can also be implemented in other embodiments without these specific details. In other instances, detailed descriptions of well-known modes, devices, circuits, and methods are omitted so as not to obscure the description of the present application with unnecessary detail.

In order to explain the technical solution of the present application, the following will be described through specific embodiments.

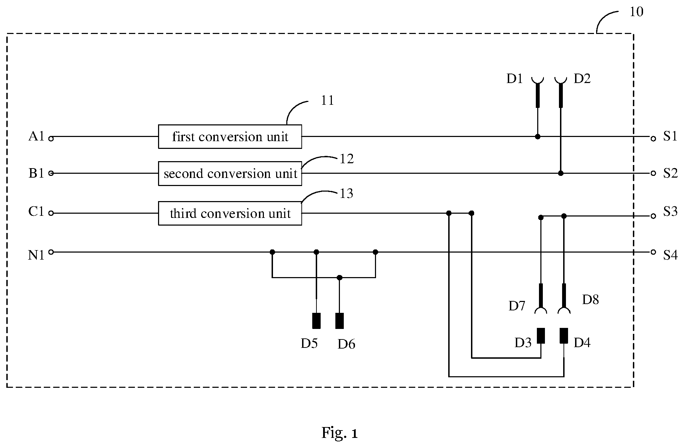

Fig. 1 is a structural diagram of a mode compatible circuit provided by an embodiment of the present application. For the convenience of explanation, only the parts related to the embodiment of the present application are shown. As shown in Fig. 1, the mode compatible circuit may include: a main circuit 10;
the main circuit 10 includes a first conversion unit 11, a second conversion unit 12, a third conversion unit 13, a first wiring terminal D1, a second wiring terminal D2, a third wiring terminal D3, a fourth wiring terminal D4, a fifth wiring terminal D5, a sixth wiring terminal D6, a seventh wiring terminal D7 and an eighth wiring terminal D8;
an A-phase input end A1 of the main circuit 10 is respectively connected with the first wiring terminal D1 and a first output end S1 of the mode compatible circuit through the first conversion unit 11, a B-phase input end B1 of the main circuit 10 is respectively connected with the second wiring terminal D2 and a second output end S2 of the mode compatible circuit through the second conversion unit 12, a C-phase input end C1 of the main circuit 10 is respectively connected with the third wiring terminal D3 and the fourth wiring terminal D4 through the third conversion unit 13, and an N-line input end N1 of the main circuit 10 is respectively connected with the fifth wiring terminal D5, the sixth wiring terminal D6 and a fourth output end S4 of the mode compatible circuit; and
the seventh wiring terminal D7 and the eighth wiring terminal D8 are connected with a third output end S3 of the mode compatible circuit.

Where, the first wiring terminal D1 and the second wiring terminal D2 may be located on the same wiring block, for example, on a first wiring block; the third wiring terminal D3 and the fourth wiring terminal D4 may be located on the same wiring block, for example, on a second wiring block; the fifth wiring terminal D5 and the sixth wiring terminal D6 may be located on the same wiring block, for example, on a third wiring block; the seventh wiring terminal D7 and the eighth wiring terminal D8 may be located on the same wiring block, for example, on a fourth wiring block. As for whether the first wiring block, the second wiring block, the third wiring block and the fourth wiring block are the same wiring block or different wiring blocks, they may be set according to the actual needs, and no specific restrictions are made here.

In the embodiment of the present application, the input end of the main circuit 10 may be connected with an external first power supply, such as mains power, which supplies power to the main circuit 10. The input end of the main circuit 10 may be used as the input end of the mode compatible circuit.

Specifically, when the mode compatible circuit works in a three-input-three-output mode and the main circuit 10 works, the third wiring terminal D3 and the fourth wiring terminal D4 may be respectively connected one-to-one with the seventh wiring terminal D7 and the eighth wiring terminal D8; and a phase difference between the output of the first conversion unit 11 and the output of the second conversion unit 12, a phase difference between the output of the second conversion unit 12 and the output of the third conversion unit 13, and a phase difference between the output of the third conversion unit 13 and the output of the first conversion unit 11 may be all controlled to a preset phase difference. The preset phase difference is 120 degrees. At this time, the first output end S1 of the mode compatible circuit is an A-phase output end, the second output end S2 of the mode compatible circuit is a B-phase output end, the third output end S3 of the mode compatible circuit is a C-phase output end, and the fourth output end S4 of the mode compatible circuit is an N-line output end.

When the mode compatible circuit works in a three-input-one-output mode and the main circuit 10 works, the first wiring terminal D1 and the second wiring terminal D2 may be respectively connected one-to-one with the third wiring terminal D3 and the fourth wiring terminal D4, and the fifth wiring terminal D5 and the sixth wiring terminal D6 may be respectively connected one-to-one with the seventh wiring terminal D7 and the eighth wiring terminal D8; and the output of the first conversion unit 11, the output of the second conversion unit 12 and the output of the third conversion unit 13 may be all controlled to be consistent, that is, the output of the first conversion unit 11, the output of the second conversion unit 12 and the output of the third conversion unit 13 are controlled the same, without phase difference. At this time, the current input from the C-phase input end C1 of the main circuit 10 is shunted to the first output end S1 of the mode compatible circuit and the second output end S2 of the mode compatible circuit through the third wiring terminal D3, the fourth wiring terminal D4, the first wiring terminal D1 and the second wiring terminal D2. Part of the current input from the N-line input end N1 of the main circuit 10 is shunted to the third output end S3 of the mode compatible circuit through the fifth wiring terminal D5, the sixth wiring terminal D6, the seventh wiring terminal D7 and the eighth wiring terminal D8, while the remaining part of the current flows to the fourth output end S4 of the mode compatible circuit. At this time, the first output end S1 of the mode compatible circuit and the second output end S2 of the mode compatible circuit are all L-line output ends, the third output end S3 of the mode compatible circuit and the fourth output end S4 of the mode compatible circuit are all N-line output ends.

Optionally, when the mode compatible circuit adopts a three-input-one-output mode, the first output end S1 of the mode compatible circuit and the second output end S2 of the mode compatible circuit may be shorted together as an L-line output end, and the third output end S3 of the mode compatible circuit and the fourth output end S4 of the mode compatible circuit may be shorted together as an N-line output end. The short connector may be used for short connection.

In the embodiment of the present application, the first conversion unit 11, the second conversion unit 12 and the third conversion unit 13 may all include a rectifier sub unit and an inverter sub unit, which can realize the functions of rectification and inversion.

It can be seen from the above description that the mode compatible circuit provided by the embodiment of the present application may be compatible with the three-input-three-output mode and the three-input-one-output mode. When the three-input-three-output mode is changed into the three-input-one-output mode, the current of the live line can be averagely shunted to the first output end S1 and the second output end S2 of the mode compatible circuit, and the current of the neutral line can be averagely shunted to the third output end S3 and the fourth output end S4 of the mode compatible circuit, by directly adjusting the connection relationship between each wiring terminal, so that the current of each wire can be within the bearable range of the corresponding air circuit breaker, without adding additional air circuit breakers or replacing air circuit breakers or adding additional wiring blocks or replacing wiring blocks, which can save the cost. For example, suppose that the current of phase A, phase B and phase C at the input end is 60A, the current of N-line at the input end is 180A, and the current that the corresponding air circuit breaker of each wire can withstand is 100A. When the mode is three input-one-output, the current at each output end of the mode compatible circuit is 90A through shunting, which is within the bearable range of the air circuit breaker. Of course, the embodiment can also directly add an N-line output without changing the wire connection, but this will greatly increase the cost.

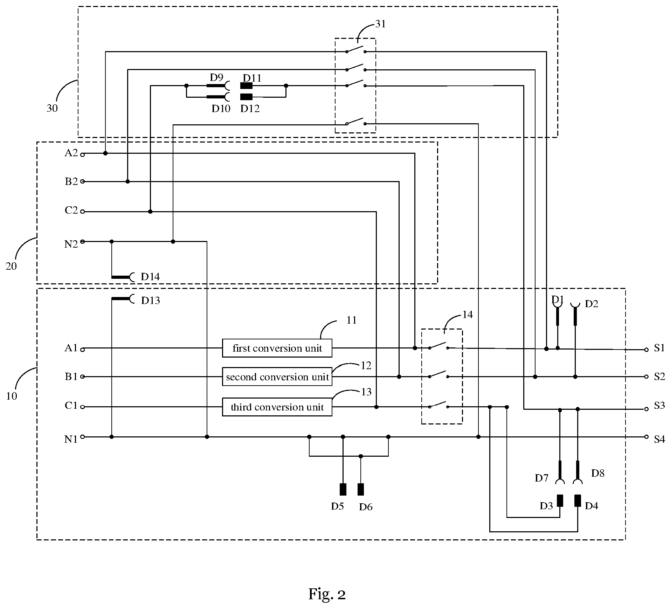

In one embodiment of the present application, as shown in Fig. 2, the mode compatible circuit further includes a static bypass circuit 20;
an A-phase input end A2 of the static bypass circuit 20 is connected with an output end of the first conversion unit 11, a B-phase input end B2 of the static bypass circuit 20 is connected with an output end of the second conversion unit 12, a C-phase input end C2 of the static bypass circuit 20 is connected with an output end of the third conversion unit 13, and an N-line input end N2 of the static bypass circuit 20 is respectively connected with the fifth wiring terminal D5, the sixth wiring terminal D6 and the fourth output end S4 of the mode compatible circuit.

In the embodiment of the present application, the input end of the static bypass circuit 20 may be connected with an external second power supply, such as mains power or other power supplies. The second power supply is provided for the static bypass circuit 20. The second power supply and the first power supply may be the same or different. When the main circuit 10 fails and cannot work, the static bypass circuit 20 can be enabled to work to supply power to the load connected to the output end of the mode compatible circuit.

Specifically, when the mode compatible circuit works in a three-input-three-output mode and the static bypass circuit 20 works, the third wiring terminal D3 and the fourth wiring terminal D4 may be respectively connected one-to-one with the seventh wiring terminal D7 and the eighth wiring terminal D8. At this time, the first output end S1 of the mode compatible circuit is an A-phase output end, the second output end S2 of the mode compatible circuit is a B-phase output end, the third output end S3 of the mode compatible circuit is a C-phase output end, and the fourth output end S4 of the mode compatible circuit is an N-line output end.

When the mode compatible circuit works in a three-input-one-output mode and the static bypass circuit 20 works, the first wiring terminal D1 and the second wiring terminal D2 may be respectively connected one-to-one with the third wiring terminal D3 and the fourth wiring terminal D4, and the fifth wiring terminal D5 and the sixth wiring terminal D6 may be respectively connected one-to-one with the seventh wiring terminal D7 and the eighth wiring terminal D8. At this time, the current input from the C-phase input end C2 of the static bypass circuit 20 is shunted to the first output end S1 of the mode compatible circuit and the second output end S2 of the mode compatible circuit through the third wiring terminal D3, the fourth wiring terminal D4, the first wiring terminal D1 and the second wiring terminal D2. Part of the current input from the N-line input end N2 of the static bypass circuit 20 is shunted to the third output end S3 of the mode compatible circuit through the fifth wiring terminal D5, the sixth wiring terminal D6, the seventh wiring terminal D7 and the eighth wiring terminal D8, while the remaining part of the current flows to the fourth output end S4 of the mode compatible circuit. At this time, the first output end S1 of the mode compatible circuit and the second output end S2 of the mode compatible circuit are all L-line output ends, the third output end S3 of the mode compatible circuit and the fourth output end S4 of the mode compatible circuit are all N-line output ends.

It can be seen from the above description that the embodiment of the present application can not only realize the compatibility of the three-input-three-output mode and three-input-one-output mode of the main circuit 10, but also realize the compatibility of the three-input-three-output mode and three-input-one-output mode of the static bypass circuit 20, and can save the cost.

In one embodiment of the present application, as shown in Fig. 2, the mode compatible circuit further includes a maintenance bypass circuit 30; the maintenance bypass circuit 30 includes a ninth wiring terminal D9, a tenth wiring terminal D10, an eleventh wiring terminal D11 and a twelfth wiring terminal D12; the main circuit 10 further includes a thirteenth wiring terminal 13 connected with the N-line input end N1 of the main circuit 10; and the static bypass circuit 20 includes a fourteenth wiring terminal D14 connected with the N-line input end N2 of the static bypass circuit 20;
an A-phase input end of the maintenance bypass circuit 30 is respectively connected with the A-phase input end A2 of the static bypass circuit 20, the first wiring terminal D1 and the first output end S1 of the mode compatible circuit, a B-phase input end of the maintenance bypass circuit 30 is respectively connected with the B-phase input end B2 of the static bypass circuit 20, the second wiring terminal D2 and the second output end S2 of the mode compatible circuit, a C-phase input end of the maintenance bypass circuit 30 is respectively connected with the C-phase input end C2 of the static bypass circuit 20, the ninth wiring terminal D9 and the tenth wiring terminal D10, and an N-line input end of the maintenance bypass circuit 30 is respectively connected with the N-line input end N2 of the static bypass circuit 20, the fourteenth wiring terminal D14 and the fourth output end S4 of the mode compatible circuit; and
the eleventh wiring terminal D11 and the twelfth wiring terminal D12 are connected with the third output end S3 of the mode compatible circuit.

Where, the ninth wiring terminal D9 and the tenth wiring terminal D10 may be located on the same wiring block, for example, on a fifth wiring block; the eleventh wiring terminal D11 and the twelfth wiring terminal D12 may be located on the same wiring block, for example, on a sixth wiring block; the thirteenth wiring terminal D13 and the fourteenth wiring terminal D14 may be located on the same wiring block, for example, on a seventh wiring block. As for whether the first wiring block, the second wiring block, the third wiring block, the fourth wiring block, the fifth wiring block, the sixth wiring block and the seventh wiring block are the same wiring block or different wiring blocks, they may be set according to the actual needs, and no specific restrictions are made here.

The maintenance bypass circuit 30 may be used during maintenance. The maintenance bypass circuit 30 may share an input end with the static bypass circuit 20.

Specifically, when the mode compatible circuit works in a three-input-three-output mode and the maintenance bypass circuit 30 works, the ninth wiring terminal D9 and the tenth wiring terminal D10 may be connected one-to-one with the eleventh wiring terminal D11 and the twelfth wiring terminal D12, respectively. At this time, the first output end S1 of the mode compatible circuit is an A-phase output end, the second output end S2 of the mode compatible circuit is a B-phase output end, the third output end S3 of the mode compatible circuit is a C-phase output end, and the fourth output end S4 of the mode compatible circuit is an N-line output end.

When the mode compatible circuit works in a three-input-one-output mode and the maintenance bypass circuit 30 works, the fourteenth wiring terminal D14 and the thirteenth wiring terminal D13 may be respectively connected one-to-one with the eleventh wiring terminal D11 and the twelfth wiring terminal D12, the A-phase input end A2 of the static bypass circuit 20, the B-phase input end B2 of the static circuit 20 and the C-phase input end C2 of the static bypass circuit 20 may be short-connected, that is, the A-phase input end of the maintenance bypass circuit 30, the B-phase input end of the maintenance bypass circuit 30 and the C-phase input end of the maintenance bypass circuit 30 may be short-connected, and the N-line input end N2 of the static bypass circuit 20 and the N-line input end N1 may be short-connected. At this time, since phases A, B and C of the maintenance bypass circuit 30 are shorted together, the current from the three phases may be shunted to the first output end S1 of the mode compatible circuit and the second output end S2 of the mode compatible circuit. Part of the current input from the N-line input end of the maintenance bypass circuit 30 is shunted to the third output end S3 of the mode compatible circuit through the fourteenth wiring terminal D14, the thirteenth wiring terminal D13, the eleventh wiring terminal D11 and the twelfth wiring terminal D12, while the remaining part of the current flows to the fourth output end S4 of the mode compatible circuit. At this time, the first output end S1 of the mode compatible circuit and the second output end S2 of the mode compatible circuit are all L-line output ends, the third output end S3 of the mode compatible circuit and the fourth output end S4 of the mode compatible circuit are all N-line output ends.

It can be seen from the above description that the embodiment of the present application can not only realize the compatibility of the three-input-three-output mode and three-input-one-output mode of the main circuit 10, and the compatibility of the three-input-three-output mode and three-input-one-output mode of the static bypass circuit 20, but also realize the compatibility of the three-input-three-output mode and three-input-one-output mode of the maintenance bypass circuit 30, and can save the cost and the wiring block size and so on.

In one embodiment of the present application, as shown in Fig. 2, the maintenance bypass circuit 30 further includes a first switching unit 31;

the A-phase input end of the maintenance bypass circuit 30 is respectively connected with the first wiring terminal D1 and the first output end S1 of the mode compatible circuit through the first switching unit 31, the B-phase input end of the maintenance bypass circuit 30 is respectively connected with the second wring terminal D2 and the second output end S2 of the mode compatible circuit through the first switching unit 31, and the N-line input end of the maintenance bypass circuit 30 is connected with the fourth output end S4 of the mode compatible circuit through the first switching unit 31; and
the eleventh wiring terminal D11 and the twelfth wiring terminal D12 are connected with the third output end 31 of the mode compatible circuit through the first switching unit 31.

As shown in Fig. 2, the first switching unit 31 may include four switches, which are respectively located on each line of the maintenance bypass circuit 30. The four switches may be located on the same air circuit breaker to realize simultaneous closing and opening. When the maintenance bypass circuit 30 is working, the first switching unit 31 may be controlled to close, and when the maintenance bypass circuit 30 is not working, the first switching unit 31 may be controlled to open.

In one embodiment of the present application, as shown in Fig. 2, the main circuit 10 further includes a second switching unit 14; and
an output end of the first conversion unit 11 is respectively connected with the first wiring terminal D1 and the first output end S1 of the mode compatible circuit through the second switching unit 14; an output end of the second conversion unit 12 is respectively connected with the second wiring terminal D2 and the second output end S2 of the mode compatible circuit through the second switching unit 14; and an output end of the third conversion unit 13 is respectively connected with the third wiring terminal D3 and the fourth wiring terminal D4 through the second switching unit 14.

As shown in Fig. 2, the current of main circuit 10 can reach the output end of the mode compatible circuit only after passing through the second switching unit 14, the output of the static bypass circuit 20 can reach the output end of the mode compatible circuit only after passing through the second switching unit 14, and the output of maintenance bypass circuit 30 can reach the output end of the mode compatible circuit without passing through the second switching unit 14. Therefore, when the main circuit 10 or the static bypass circuit 20 is working, the second switching unit 14 is controlled to close, and when the main circuit 10 and the static bypass circuit 20 are not working, the second switching unit 14 is controlled to open.

Where, the second switching unit 14 may include three switches, which are respectively located on each line of the main circuit 10. The three switches may be located on the same air circuit breaker to realize simultaneous closing and opening.

In one embodiment of the present application, the mode compatible circuit further includes a control circuit;
the control circuit is respectively connected with the first conversion unit 11, the second conversion unit 12 and the third conversion unit 13.

In the embodiment of the present application, the control circuit can control the output mode of the first conversion unit 11, the second conversion unit 12 and the third conversion unit 13 so as to adapt to the three-input-three-output mode or the three-input-one-output mode. Specifically, when working in the three-input-three-output mode, the control circuit controls that the phase difference between the output of the first conversion unit 11 and the output of the second conversion unit 12, the phase difference between the output of the second conversion unit 12 and the output of the third conversion unit 13, and the phase difference between the output of the third conversion unit 13 and the output of the first conversion unit 11 are a preset phase difference; when working in the three-input-one-output mode, the control circuit controls the output of the first conversion unit 11, the output of the second conversion unit 12 and the output of the third conversion unit 13 to be consistent.

Optionally, the control circuit may also be connected with the first switching unit 31 and the second switching unit 14 to control the closing or opening of the first switching unit 31 and the closing or opening of the second switching unit 14.

Optionally, the control circuit may also be connected with each wiring terminal to control the connection relationship between each wiring terminal.

Optionally, the connection relationship of each wiring terminal may also be controlled or changed manually.

Corresponding to the above mode compatible circuit, the embodiment of the present application also provides an uninterruptible power supply, including the mode compatible circuit of any of the above embodiments, and has the same beneficial effect as the above mode compatible circuit.

Corresponding to the above mode compatible circuit, the embodiment of the present application also provides a mode compatibility method and has the same beneficial effect as the above mode compatibility circuit.

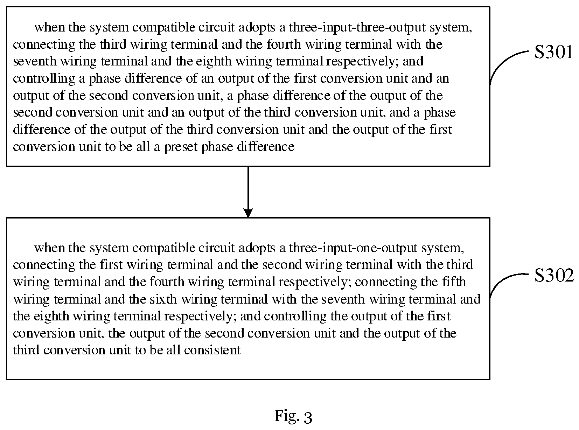

The above mode compatibility method is applied to the mode compatibility circuit of any one of the above embodiments. As shown in Fig. 3, the mode compatibility method includes:

S301: when the mode compatible circuit adopts a three-input-three-output mode, connecting the third wiring terminal and the fourth wiring terminal with the seventh wiring terminal and the eighth wiring terminal respectively, and controlling a phase difference of an output of the first conversion unit and an output of the second conversion unit, a phase difference of the output of the second conversion unit and an output of the third conversion unit, and a phase difference of the output of the third conversion unit and the output of the first conversion unit be all a preset phase difference.

S302: when the mode compatible circuit adopts a three-input-one-output mode, connecting the first wiring terminal and the second wiring terminal with the third wiring terminal and the fourth wiring terminal respectively, connecting the fifth wiring terminal and the sixth wiring terminal with the seventh wiring terminal and the eighth wiring terminal respectively, and controlling the output of the first conversion unit, the output of the second conversion unit and the output of the third conversion unit to be all consistent.

In one embodiment of the present application, the mode compatible method further includes:

when the mode compatible circuit adopts the three-input-three-output mode, connecting a ninth wiring terminal and a tenth wiring terminal with an eleventh wiring terminal and a twelfth wiring terminal respectively; and

when the mode compatible circuit adopts the three-input-one-output mode, connecting a fourteenth wiring terminal and a thirteenth wiring terminal with the eleventh wiring terminal and the twelfth wiring terminal respectively, and short-connecting an A-phase input end of a static bypass circuit, a B-phase input end of the static bypass circuit and a C-phase input end of the static bypass circuit.

In one embodiment of the present application, the mode compatible method further includes:

when the mode compatible circuit adopts the three-input-one-output mode, short-connecting an N-line input end of a static bypass circuit and the N-line input end of the main circuit, short-connecting the first output end of the mode compatible circuit and the second output end of the mode compatible circuit, and short-connecting the third output end of the mode compatible circuit and the fourth output end of the mode compatible circuit.

The specific process of the mode compatibility method may refer to the detailed description of the above mode compatibility circuit, which will not be repeated here.

It should be understood that the size of the sequence number of each step in the above embodiments does not mean the order of execution, and the execution order of each process should be determined by its function and internal logic, without any restriction on the implementation process of the embodiments of the present application.

Those skilled in the art can clearly understand that, for the convenience and simplicity of description, only the division of the above functional units and modules will be illustrated. In practical applications, the above functional allocation can be completed by different functional units and modules as required, that is, the internal structure of the mode compatible circuit is shunted into different functional units or modules to complete all or part of the above described functions. Each functional unit and module in the embodiment can be integrated in a processing unit, or each unit can exist physically independently, or two or more units can be integrated in a unit. The integrated units can be implemented in the form of hardware or software functional units. In addition, the specific names of each functional unit and module are only used to distinguish each other, and are not used to limit the protection scope of the present application. The specific working process of the unit and module in the above device can refer to the corresponding process in the above method embodiment, and will not be repeated here.

In the above embodiments, the description of each embodiment has its own emphasis. For the part not detailed or recorded in one embodiment, please refer to the relevant description of other embodiments.

Those skilled in the art can realize that the units and algorithm steps of each example described in combination with the embodiments disclosed herein can be realized by electronic hardware, or the combination of computer software and electronic hardware. Whether these functions are implemented in hardware or software depends on the specific application and design constraints of the technical solution. Professionals and technicians can use different methods for each specific application to realize the described functions, but such implementation should not be considered beyond the scope of the present application.

In the embodiments provided in the present application, it should be understood that the disclosed mode compatible circuits and methods can be realized in other ways. For example, the mode compatible circuit embodiments described above are only schematic, for example, the division of the modules or units is only a logical function division, and there can be another division method when actually implemented, for example, multiple units or components can be combined or integrated into another system, or some features can be ignored or not implemented. On the other hand, the mutual coupling or direct coupling or communication connection shown or discussed can be indirect coupling or communication connection through some interfaces, devices or units, and can be electrical, mechanical or other forms.

The units described as separate units may or may not be physically separated, and the units displayed as units may or may not be physical units, that is, they may be located in one place or distributed to multiple network units. Some or all of the units can be selected according to actual needs to achieve the purpose of the embodiment.

In addition, each functional unit in each embodiment of the present application can be integrated in a processing unit, or each unit can exist physically independently, or two or more units can be integrated in a unit. The integrated units mentioned above can be realized in the form of hardware or software functional units.

If the integrated module/unit is realized in the form of software functional unit and sold or used as an independent product, it can be stored in a computer readable storage medium. Based on this understanding, the present application realizes all or part of the processes in the methods of the above embodiments, and can also be completed by instructing the relevant hardware through a computer program. The computer program can be stored in a computer-readable storage medium. When the computer program is executed by a processor, the steps of the above embodiments of each method can be realized. The computer program includes computer program code, which can be in the form of source code, object code, executable file or some intermediate forms. The computer-readable medium may include any entity or device capable of carrying the computer program code, recording medium, U disk, mobile hard disk, magnetic disk, optical disk, computer memory, read only memory (ROM), random access memory (RAM), electric carrier signal, telecommunication signal, software distribution medium, etc. It should be noted that the content contained in the computer-readable medium can be appropriately increased or decreased according to the requirements of the legislation and patent practice in the jurisdiction. For example, in some jurisdictions, according to the legislation and patent practice, the computer-readable medium does not include electrical carrier signals and telecommunications signals.

The above embodiments are only used to explain the technical solution of the present application, not to limit it; Although the present application has been described in detail with reference to the preceding embodiments, those skilled in the art should understand that they can still modify the technical solutions recorded in the preceding embodiments, or equivalent replace some of the technical features.

## Claims

1. A mode compatible circuit comprising a main circuit (10) and a control circuit, **characterized in that**:
the main circuit (10) comprises a first conversion unit (11), a second conversion unit (12), a third conversion unit (13), a first wiring terminal (D1), a second wiring terminal (D2), a third wiring terminal (D3), a fourth wiring terminal (D4), a fifth wiring terminal (D5), a sixth wiring terminal (D6), a seventh wiring terminal (D7) and an eighth wiring terminal (D8);
the control circuit is respectively connected with the first conversion unit (11), the second conversion unit (12) and the third conversion unit (13);
an A-phase input end (A1) of the main circuit (10) is respectively connected with the first wiring terminal (D1) and a first output end (S1) of the mode compatible circuit through the first conversion unit (11), a B-phase input end (B1) of the main circuit (10) is respectively connected with the second wiring terminal (D2) and a second output end (S2) of the mode compatible circuit through the second conversion unit (12), a C-phase input end (C1) of the main circuit (10) is respectively connected with the third wiring terminal (D3) and the fourth wiring terminal (D4) through the third conversion unit (13), and an N-line input end (N1) of the main circuit (10) is respectively connected with the fifth wiring terminal (D5), the sixth wiring terminal (D6) and a fourth output end (S4) of the mode compatible circuit; and
the seventh wiring terminal (D7) and the eighth wiring terminal (D8) are connected with a third output end (S3) of the mode compatible circuit;
in a first mode, the control circuit is adapted to control a phase difference of an output of the first conversion unit (11) and an output of the second conversion unit (12), a phase difference of the output of the second conversion unit (12) and an output of the third conversion unit (13), and a phase difference of the output of the third conversion unit (13) and the output of the first conversion unit (11) to be all a preset phase difference; and
in a second mode, the control circuit is adapted to control the output of the first conversion unit (11), the output of the second conversion unit (12) and the output of the third conversion unit (13) to be all same, without a phase difference;
the mode compatible circuit is configured to:
in the first mode, connect the third wiring terminal (D3) and the fourth wiring terminal (D4) with the seventh wiring terminal (D7) and the eighth wiring terminal (D8) respectively; and
in the second mode, connect the first wiring terminal (D1) and the second wiring terminal (D2) with the third wiring terminal (D3) and the fourth wiring terminal (D4) respectively, and connect the fifth wiring terminal (D5) and the sixth wiring terminal (D6) with the seventh wiring terminal (D7) and the eighth wiring terminal (D8) respectively.

2. The mode compatible circuit according to claim 1, further comprising a static bypass circuit (20); wherein
an A-phase input end (A2) of the static bypass circuit (20) is connected with an output end of the first conversion unit (11), a B-phase input end (B2) of the static bypass circuit (20) is connected with an output end of the second conversion unit (12), a C-phase input end (C2) of the static bypass circuit (20) is connected with an output end of the third conversion unit (13), and an N-line input end (N2) of the static bypass circuit (20) is respectively connected with the fifth wiring terminal (D5), the sixth wiring terminal (D6) and the fourth output end (S4) of the mode compatible circuit.

3. The mode compatible circuit according to claim 2, further comprising a maintenance bypass circuit (30); wherein the maintenance bypass circuit (30) comprises a ninth wiring terminal (D9), a tenth wiring terminal (D10), an eleventh wiring terminal (D11) and a twelfth wiring terminal (D12); the main circuit (10) further comprises a thirteenth wiring terminal (D13) connected with the N-line input end (N1) of the main circuit (10); and the static bypass circuit (20) comprises a fourteenth wiring terminal (D14) connected with the N-line input end (N2) of the static bypass circuit (20);
an A-phase input end of the maintenance bypass circuit (30) is respectively connected with the A-phase input end (A2) of the static bypass circuit (20), the first wiring terminal (D1) and the first output end (S1) of the mode compatible circuit, a B-phase input end of the maintenance bypass circuit (30) is respectively connected with the B-phase input end (B2) of the static bypass circuit (20), the second wiring terminal (D2) and the second output end (S2) of the mode compatible circuit, a C-phase input end of the maintenance bypass circuit (30) is respectively connected with the C-phase input end (C2) of the static bypass circuit (20), the ninth wiring terminal (D9) and the tenth wiring terminal (D10), and an N-line input end of the maintenance bypass circuit (30) is respectively connected with the N-line input end (N2) of the static bypass circuit (20), the fourteenth wiring terminal (D14) and the fourth output end (S4) of the mode compatible circuit; and
the eleventh wiring terminal (D11) and the twelfth wiring terminal (D12) are connected with the third output end (S3) of the mode compatible circuit.

4. The mode compatible circuit according to claim 3, wherein the maintenance bypass circuit (30) further comprises a first switching unit (31);
the A-phase input end of the maintenance bypass circuit (30) is respectively connected with the first wiring terminal (D1) and the first output end (S1) of the mode compatible circuit through the first switching unit (31), the B-phase input end of the maintenance bypass circuit (30) is respectively connected with the second wring terminal (D2) and the second output end (S2) of the mode compatible circuit through the first switching unit (31), and the N-line input end of the maintenance bypass circuit (30) is connected with the fourth output end (S4) of the mode compatible circuit through the first switching unit (31); and
the eleventh wiring terminal (D11) and the twelfth wiring terminal (D12) are connected with the third output end (S3) of the mode compatible circuit through the first switching unit (31).

5. The mode compatible circuit according to anyone of claims 1 to 4, wherein the main circuit (10) further comprises a second switching unit (14); and
an output end of the first conversion unit (11) is respectively connected with the first wiring terminal (D1) and the first output end (S1) of the mode compatible circuit through the second switching unit (14); an output end of the second conversion unit (12) is respectively connected with the second wiring terminal (D2) and the second output end (S2) of the mode compatible circuit through the second switching unit (14); and an output end of the third conversion unit (13) is respectively connected with the third wiring terminal (D3) and the fourth wiring terminal (D4) through the second switching unit (14).

6. An uninterruptible power supply comprising the mode compatible circuit according to anyone of claims 1 to 5.

7. A mode compatible method applied to the mode compatible circuit according to claim 1, further comprising:
when the mode compatible circuit adopts the first mode, connecting a ninth wiring terminal (D9) and a tenth wiring terminal (D10) with an eleventh wiring terminal (D11) and a twelfth wiring terminal (D12) respectively; and
when the mode compatible circuit adopts the second mode, connecting a fourteenth wiring terminal (D14) and a thirteenth wiring terminal (D13) with the eleventh wiring terminal (D11) and the twelfth wiring terminal (D12) respectively, and short-connecting an A-phase input end (A2) of a static bypass circuit (20), a B-phase input end (B2) of the static bypass circuit (20) and a C-phase input end (C2) of the static bypass circuit (20).

8. The mode compatible method according to claim 7, further comprising:
when the mode compatible circuit adopts the second mode, short-connecting an N-line input end (N2) of a static bypass circuit (20) and the N-line input end (N1) of the main circuit (10), short-connecting the first output end (S1) of the mode compatible circuit and the second output end (S2) of the mode compatible circuit, and short-connecting the third output end (S3) of the mode compatible circuit and the fourth output end (S4) of the mode compatible circuit.

## Patentansprüche

1. Moduskompatible Schaltung, umfassend eine Hauptschaltung (10) und eine Steuerschaltung, **dadurch gekennzeichnet, dass**:
die Hauptschaltung (10) eine erste Umwandlungseinheit (11), eine zweite Umwandlungseinheit (12), eine dritte Umwandlungseinheit (13), einen ersten Verdrahtungsanschluss (D1), einen zweiten Verdrahtungsanschluss (D2), einen dritten Verdrahtungsanschluss (D3), einen vierten Verdrahtungsanschluss (D4), einen fünften Verdrahtungsanschluss (D5), einen sechsten Verdrahtungsanschluss (D6), einen siebten Verdrahtungsanschluss (D7) und einen achten Verdrahtungsanschluss (D8) umfasst;
die Steuerschaltung jeweils mit der ersten Umwandlungseinheit (11), der zweiten Umwandlungseinheit (12) und der dritten Umwandlungseinheit (13) verbunden ist;
ein A-Phasen-Eingangsende (A1) der Hauptschaltung (10) jeweils mit dem ersten Verdrahtungsanschluss (D1) und einem ersten Ausgangsende (S1) der moduskompatiblen Schaltung über die erste Umwandlungseinheit (11) verbunden ist, ein B-Phasen-Eingangsende (B1) der Hauptschaltung (10) jeweils mit dem zweiten Verdrahtungsanschluss (D2) und einem zweiten Ausgangsende (S2) der moduskompatiblen Schaltung über die zweite Umwandlungseinheit (12) verbunden ist, ein C-Phasen-Eingangsende (C1) der Hauptschaltung (10) jeweils mit dem dritten Verdrahtungsanschluss (D3) und dem vierten Verdrahtungsanschluss (D4) über die dritte Umwandlungseinheit (13) verbunden ist und ein N-Leitungs-Eingangsende (N1) der Hauptschaltung (10) jeweils mit dem fünften Verdrahtungsanschluss (D5), dem sechsten Verdrahtungsanschluss (D6) und einem vierten Ausgangsende (S4) der moduskompatiblen Schaltung verbunden ist; und
der siebte Verdrahtungsanschluss (D7) und der achte Verdrahtungsanschluss (D8) mit einem dritten Ausgangsende (S3) der moduskompatiblen Schaltung verbunden sind;
die Steuerschaltung dazu ausgelegt ist, in einem ersten Modus eine Phasendifferenz einer Ausgabe der ersten Umwandlungseinheit (11) und einer Ausgabe der zweiten Umwandlungseinheit (12), eine Phasendifferenz der Ausgabe der zweiten Umwandlungseinheit (12) und einer Ausgabe der dritten Umwandlungseinheit (13), und eine Phasendifferenz der Ausgabe der dritten Umwandlungseinheit (13) und der Ausgabe der ersten Umwandlungseinheit (11) so zu steuern, dass sie alle eine voreingestellte Phasendifferenz sind; und
die Steuerschaltung dazu ausgelegt ist, in einem zweiten Modus die Ausgabe der ersten Umwandlungseinheit (11), die Ausgabe der zweiten Umwandlungseinheit (12) und die Ausgabe der dritten Umwandlungseinheit (13) so zu steuern, dass sie alle ohne eine Phasendifferenz gleich sind;
die moduskompatible Schaltung dazu eingerichtet ist:
im ersten Modus den dritten Verdrahtungsanschluss (D3) und den vierten Verdrahtungsanschluss (D4) mit dem siebten Verdrahtungsanschluss (D7) bzw. dem achten Verdrahtungsanschluss (D8) zu verbinden; und
im zweiten Modus den ersten Verdrahtungsanschluss (D1) und den zweiten Verdrahtungsanschluss (D2) mit dem dritten Verdrahtungsanschluss (D3) bzw. dem vierten Verdrahtungsanschluss (D4) zu verbinden und den fünften Verdrahtungsanschluss (D5) und den sechsten Verdrahtungsanschluss (D6) mit dem siebten Verdrahtungsanschluss (D7) bzw. dem achten Verdrahtungsanschluss (D8) zu verbinden.

2. Moduskompatible Schaltung nach Anspruch 1, des Weiteren umfassend eine statische Umgehungsschaltung (20); wobei
ein A-Phasen-Eingangsende (A2) der statischen Umgehungsschaltung (20) mit einem Ausgangsende der ersten Umwandlungseinheit (11) verbunden ist, ein B-Phasen-Eingangsende (B2) der statischen Umgehungsschaltung (20) mit einem Ausgangsende der zweiten Umwandlungseinheit (12) verbunden ist, ein C-Phasen-Eingangsende (C2) der statischen Umgehungsschaltung (20) mit einem Ausgangsende der dritten Umwandlungseinheit (13) verbunden ist und ein N-Leitungs-Eingangsende (N2) der statischen Umgehungsschaltung (20) jeweils mit dem fünften Verdrahtungsanschluss (D5), dem sechsten Verdrahtungsanschluss (D6) und dem vierten Ausgangsende (S4) der moduskompatiblen Schaltung verbunden ist.

3. Moduskompatible Schaltung nach Anspruch 2, des Weiteren umfassend eine Wartungsumgehungsschaltung (30); wobei die Wartungsumgehungsschaltung (30) einen neunten Verdrahtungsanschluss (D9), einen zehnten Verdrahtungsanschluss (D10), einen elften Verdrahtungsanschluss (D11) und einen zwölften Verdrahtungsanschluss (D12) umfasst; die Hauptschaltung (10) des Weiteren einen dreizehnten Verdrahtungsanschluss (D13) umfasst, der mit dem N-Leitungs-Eingangsende (N1) der Hauptschaltung (10) verbunden ist; und die statische Umgehungsschaltung (20) einen vierzehnten Verdrahtungsanschluss (D14) umfasst, der mit dem N-Leitungs-Eingangsende (N2) der statischen Umgehungsschaltung (20) verbunden ist;
ein A-Phasen-Eingangsende der Wartungsumgehungsschaltung (30) jeweils mit dem A-Phasen-Eingangsende (A2) der statischen Umgehungsschaltung (20), dem ersten Verdrahtungsanschluss (D1) und dem ersten Ausgangsende (S1) der moduskompatiblen Schaltung verbunden ist, ein B-Phasen-Eingangsende der Wartungsumgehungsschaltung (30) jeweils mit dem B-Phasen-Eingangsende (B2) der statischen Umgehungsschaltung (20), dem zweiten Verdrahtungsanschluss (D2) und dem zweiten Ausgangsende (S2) der moduskompatiblen Schaltung verbunden ist, ein C-Phasen-Eingangsende der Wartungsumgehungsschaltung (30) jeweils mit dem C-Phasen-Eingangsende (C2) der statischen Umgehungsschaltung (20), dem neunten Verdrahtungsanschluss (D9) und dem zehnten Verdrahtungsanschluss (D10) verbunden ist und ein N-Leitungs-Eingangsende der Wartungsumgehungsschaltung (30) jeweils mit dem N-Leitungs-Eingangsende (N2) der statischen Umgehungsschaltung (20), dem vierzehnten Verdrahtungsanschluss (D14) und dem vierten Ausgangsende (S4) der moduskompatiblen Schaltung verbunden ist; und
der elfte Verdrahtungsanschluss (D11) und der zwölfte Verdrahtungsanschluss (D12) mit dem dritten Ausgangsende (S3) der moduskompatiblen Schaltung verbunden sind.

4. Moduskompatible Schaltung nach Anspruch 3, wobei die Wartungsumgehungsschaltung (30) des Weiteren eine erste Schalteinheit (31) umfasst;
das A-Phasen-Eingangsende der Wartungsumgehungsschaltung (30) jeweils mit dem ersten Verdrahtungsanschluss (D1) und dem ersten Ausgangsende (S1) der moduskompatiblen Schaltung über die erste Schalteinheit (31) verbunden ist, das B-Phasen-Eingangsende der Wartungsumgehungsschaltung (30) jeweils mit dem zweiten Verdrahtungsanschluss (D2) und dem zweiten Ausgangsende (S2) der moduskompatiblen Schaltung über die erste Schalteinheit (31) verbunden ist und das N-Leitungs-Eingangsende der Wartungsumgehungsschaltung (30) mit dem vierten Ausgangsende (S4) der moduskompatiblen Schaltung über die erste Schalteinheit (31) verbunden ist; und
der elfte Verdrahtungsanschluss (D11) und der zwölfte Verdrahtungsanschluss (D12) mit dem dritten Ausgangsende (S3) der moduskompatiblen Schaltung über die erste Schalteinheit (31) verbunden sind.

5. Moduskompatible Schaltung nach einem der Ansprüche 1 bis 4, wobei die Hauptschaltung (10) des Weiteren eine zweite Schalteinheit (14) umfasst; und
ein Ausgangsende der ersten Umwandlungseinheit (11) jeweils mit dem ersten Verdrahtungsanschluss (D1) und dem ersten Ausgangsende (S1) der moduskompatiblen Schaltung über die zweite Schalteinheit (14) verbunden ist; ein Ausgangsende der zweiten Umwandlungseinheit (12) jeweils mit dem zweiten Verdrahtungsanschluss (D2) und dem zweiten Ausgangsende (S2) der moduskompatiblen Schaltung über die zweite Schalteinheit (14) verbunden ist; und ein Ausgangsende der dritten Umwandlungseinheit (13) jeweils mit dem dritten Verdrahtungsanschluss (D3) und dem vierten Verdrahtungsanschluss (D4) über die zweite Schalteinheit (14) verbunden ist.

6. Unterbrechungsfreie Stromversorgung, umfassend die moduskompatible Schaltung nach einem der Ansprüche 1 bis 5.

7. Moduskompatibles Verfahren, das auf die moduskompatible Schaltung nach Anspruch 1 angewendet wird, des Weiteren umfassend:
wenn die moduskompatible Schaltung den ersten Modus annimmt, Verbinden eines neunten Verdrahtungsanschlusses (D9) und eines zehnten Verdrahtungsanschlusses (D10) mit einem elften Verdrahtungsanschluss (D11) bzw. einem zwölften Verdrahtungsanschluss (D12); und,
wenn die moduskompatible Schaltung den zweiten Modus annimmt, Verbinden eines vierzehnten Verdrahtungsanschlusses (D14) und eines dreizehnten Verdrahtungsanschlusses (D13) mit dem elften Verdrahtungsanschluss (D11) bzw. dem zwölften Verdrahtungsanschluss (D12) und Kurzschließen eines A-Phasen-Eingangsendes (A2) einer statischen Umgehungsschaltung (20), eines B-Phasen-Eingangsendes (B2) der statischen Umgehungsschaltung (20) und eines C-Phasen-Eingangsendes (C2) der statischen Umgehungsschaltung (20).

8. Moduskompatibles Verfahren nach Anspruch 7, des Weiteren umfassend:
wenn die moduskompatible Schaltung den zweiten Modus annimmt, Kurzschließen eines N-Leitungs-Eingangsendes (N2) einer statischen Umgehungsschaltung (20) und des N-Leitungs-Eingangsendes (N1) der Hauptschaltung (10), Kurzschließen des ersten Ausgangsendes (S1) der moduskompatiblen Schaltung und des zweiten Ausgangsendes (S2) der moduskompatiblen Schaltung und Kurzschließen des dritten Ausgangsendes (S3) der moduskompatiblen Schaltung und des vierten Ausgangsendes (S4) der moduskompatiblen Schaltung.

## Revendications

1. Circuit à modes compatibles comprenant un circuit principal (10) et un circuit de commande, **caractérisé en ce que** :
le circuit principal (10) comprend une première unité de conversion (11), une deuxième unité de conversion (12), une troisième unité de conversion (13), une première borne de câblage (D1), une deuxième borne de câblage (D2), une troisième borne de câblage (D3), une quatrième borne de câblage (D4), une cinquième borne de câblage (D5), une sixième borne de câblage (D6), une septième borne de câblage (D7) et une huitième borne de câblage (D8) ;
le circuit de commande est respectivement relié à la première unité de conversion (11), à la deuxième unité de conversion (12) et à la troisième unité de conversion (13) ;
une extrémité d'entrée de phase A (A1) du circuit principal (10) est respectivement reliée à la première borne de câblage (D1) et à une première extrémité de sortie (S1) du circuit à modes compatibles via la première unité de conversion (11), une extrémité d'entrée de phase B (B1) du circuit principal (10) est respectivement reliée à la deuxième borne de câblage (D2) et à une deuxième extrémité de sortie (S2) du circuit à modes compatibles via la deuxième unité de conversion (12), une extrémité d'entrée de phase C (C1) du circuit principal (10) est respectivement reliée à la troisième borne de câblage (D3) et à la quatrième borne de câblage (D4) via la troisième unité de conversion (13), et une extrémité d'entrée de ligne N (N1) du circuit principal (10) est respectivement reliée à la cinquième borne de câblage (D5), à la sixième borne de câblage (D6) et à une quatrième extrémité de sortie (S4) du circuit à modes compatibles ; et
la septième borne de câblage (D7) et la huitième borne de câblage (D8) sont reliées à une troisième extrémité de sortie (S3) du circuit à modes compatibles ;
dans un premier mode, le circuit de commande est adapté pour commander une différence de phase d'une sortie de la première unité de conversion (11) et d'une sortie de la deuxième unité de conversion (12), une différence de phase de la sortie de la deuxième unité de conversion (12) et une sortie de la troisième unité de conversion (13), et une différence de phase de la sortie de la troisième unité de conversion (13) et de la sortie de la première unité de conversion (11) pour qu'elles soient toutes égales à une différence de phase préétablie; et
dans un second mode, le circuit de commande est adapté pour commander la sortie de la première unité de conversion (11), la sortie de la deuxième unité de conversion (12) et la sortie de la troisième unité de conversion (13) pour qu'elles soient toutes identiques, sans différence de phase ;
le circuit à modes compatibles est configuré pour :
dans le premier mode, relier la troisième borne de câblage (D3) et la quatrième borne de câblage (D4) à la septième borne de câblage (D7) et à la huitième borne de câblage (D8) respectivement ; et
dans le second mode, relier la première borne de câblage (D1) et la deuxième borne de câblage (D2) à la troisième borne de câblage (D3) et à la quatrième borne de câblage (D4) respectivement, et relier la cinquième borne de câblage (D5) et la sixième borne de câblage (D6) à la septième borne de câblage (D7) et à la huitième borne de câblage (D8) respectivement.

2. Circuit à modes compatibles selon la revendication 1, comprenant en outre un circuit de dérivation statique (20) ; dans lequel
une extrémité d'entrée de phase A (A2) du circuit de dérivation statique (20) est reliée à une extrémité de sortie de la première unité de conversion (11), une extrémité d'entrée de phase B (B2) du circuit de dérivation statique (20) est reliée à une extrémité de sortie de la deuxième unité de conversion (12), une extrémité d'entrée de phase C (C2) du circuit de dérivation statique (20) est reliée à une extrémité de sortie de la troisième unité de conversion (13), et une extrémité d'entrée de ligne N (N2) du circuit de dérivation statique (20) est respectivement reliée à la cinquième borne de câblage (D5), à la sixième borne de câblage (D6) et à la quatrième extrémité de sortie (S4) du circuit à modes compatibles.

3. Circuit à modes compatibles selon la revendication 2, comprenant en outre un circuit de dérivation pour maintenance (30) ; dans lequel le circuit de dérivation pour maintenance (30) comprend une neuvième borne de câblage (D9), une dixième borne de câblage (D10), une onzième borne de câblage (D11) et une douzième borne de câblage (D12) ; le circuit principal (10) comprend en outre une treizième borne de câblage (D13) reliée à l'extrémité d'entrée de ligne N (N1) du circuit principal (10) ; et le circuit de dérivation statique (20) comprend une quatorzième borne de câblage (D14) reliée à l'extrémité d'entrée de ligne N (N2) du circuit de dérivation statique (20) ;
une extrémité d'entrée de phase A du circuit de dérivation pour maintenance (30) est respectivement reliée à l'extrémité d'entrée de phase A (A2) du circuit de dérivation statique (20), à la première borne de câblage (D1) et à la première extrémité de sortie (S1) du circuit à modes compatibles, une extrémité d'entrée de phase B du circuit de dérivation pour maintenance (30) est respectivement reliée à l'extrémité d'entrée de phase B (B2) du circuit de dérivation statique (20), à la deuxième borne de câblage (D2) et à la deuxième extrémité de sortie (S2) du circuit à modes compatibles, une extrémité d'entrée de phase C du circuit de dérivation pour maintenance (30) est respectivement reliée à l'extrémité d'entrée de phase C (C2) du circuit de dérivation statique (20), à la neuvième borne de câblage (D9) et à la dixième borne de câblage (D10), et une extrémité d'entrée de ligne N du circuit de dérivation pour maintenance (30) est respectivement reliée à l'extrémité d'entrée de ligne N (N2) du circuit de dérivation statique (20), à la quatorzième borne de câblage (D14) et à la quatrième extrémité de sortie (S4) du circuit à modes compatibles ; et
la onzième borne de câblage (D11) et la douzième borne de câblage (D12) sont reliées à la troisième extrémité de sortie (S3) du circuit à modes compatibles.

4. Circuit à modes compatibles selon la revendication 3, dans lequel le circuit de dérivation pour maintenance (30) comprend en outre une première unité de commutation (31) ;
l'extrémité d'entrée de phase A du circuit de dérivation pour maintenance (30) est respectivement reliée à la première borne de câblage (D1) et à la première extrémité de sortie (S1) du circuit à modes compatibles via la première unité de commutation (31), l'extrémité d'entrée de phase B du circuit de dérivation pour maintenance (30) est respectivement reliée à la deuxième borne de câblage (D2) et à la deuxième extrémité de sortie (S2) du circuit à modes compatibles via la première unité de commutation (31), et l'extrémité d'entrée de ligne N du circuit de dérivation pour maintenance (30) est reliée à la quatrième extrémité de sortie (S4) du circuit à modes compatibles via la première unité de commutation (31) ; et
la onzième borne de câblage (D11) et la douzième borne de câblage (D12) sont reliées à la troisième extrémité de sortie (S3) du circuit à modes compatibles via la première unité de commutation (31).

5. Circuit à modes compatibles selon l'une quelconque des revendications 1 à 4, dans lequel le circuit principal (10) comprend en outre une seconde unité de commutation (14) ; et
une extrémité de sortie de la première unité de conversion (11) est respectivement reliée à la première borne de câblage (D1) et à la première extrémité de sortie (S1) du circuit à modes compatibles via la seconde unité de commutation (14) ; une extrémité de sortie de la deuxième unité de conversion (12) est respectivement reliée à la deuxième borne de câblage (D2) et à la deuxième extrémité de sortie (S2) du circuit à modes compatibles via la seconde unité de commutation (14) ; et une extrémité de sortie de la troisième unité de conversion (13) est respectivement reliée à la troisième borne de câblage (D3) et à la quatrième borne de câblage (D4) via la seconde unité de commutation (14).

6. Alimentation électrique sans coupure comprenant le circuit à modes compatibles selon l'une quelconque des revendications 1 à 5.

7. Procédé à modes compatibles appliqué au circuit à modes compatibles selon la revendication 1, comprenant en outre de :
lorsque le circuit à modes compatibles adopte le premier mode, relier une neuvième borne de câblage (D9) et une dixième borne de câblage (D10) à une onzième borne de câblage (D11) et à une douzième borne de câblage (D12) respectivement ; et
lorsque le circuit à modes compatibles adopte le second mode, relier une quatorzième borne de câblage (D14) et une treizième borne de câblage (D13) à la onzième borne de câblage (D11) et à la douzième borne de câblage (D12) respectivement, et relier en court-circuit une extrémité d'entrée de phase A (A2) d'un circuit de dérivation statique (20), une extrémité d'entrée de phase B (B2) du circuit de dérivation statique (20) et une extrémité d'entrée de phase C (C2) du circuit de dérivation statique (20).

8. Procédé à modes compatibles selon la revendication 7, comprenant en outre de :
lorsque le circuit à modes compatibles adopte le second mode, relier en court-circuit une extrémité d'entrée de ligne N (N2) d'un circuit de dérivation statique (20) et l'extrémité d'entrée de ligne N (N1) du circuit principal (10), relier en court-circuit la première extrémité de sortie (S1) du circuit à modes compatibles et la deuxième extrémité de sortie (S2) du circuit à modes compatibles, et relier en court-circuit la troisième extrémité de sortie (S3) du circuit à modes compatibles et la quatrième extrémité de sortie (S4) du circuit à modes compatibles.
